Europäisches Patentamt

European Patent Office

Office européen des brevets

(19)

(11) Numéro de publication : **0 082 077**
**B1**

(12)

# FASCICULE DE BREVET EUROPÉEN

(45) Date de publication du fascicule du brevet :
07.08.85

(51) Int. Cl.⁴ : **H 04 H   1/00, H 04 N   7/16**

(21) Numéro de dépôt : **82402260.2**

(22) Date de dépôt : **10.12.82**

(54) Procédé de télédistribution d'informations enregistrées, notamment d'œuvres musicales, et système de mise en œuvre.

(30) Priorité : 16.12.81 FR 8123518

(43) Date de publication de la demande :
22.06.83 Bulletin 83/25

(45) Mention de la délivrance du brevet :
07.08.85 Bulletin 85/32

(84) Etats contractants désignés :
DE GB NL

(56) Documents cités :
FR-A- 2 172 142
FR-A- 2 410 863
GB-A- 2 038 147
US-A- 3 718 906
US-A- 3 729 581
FUNKSCHAU, vol. 49, no. 18, août 1977, pages 847-851, Munich (DE); "Trotz veränderter Geschwindigkeit: Gleiche Tonhöhe"

(73) Titulaire : **Gremillet, Jacques**
**2, Route de Choisel**
**F-78460 Chevreuse (FR)**

(72) Inventeur : **Gremillet, Jacques**
**2, Route de Choisel**
**F-78460 Chevreuse (FR)**

(74) Mandataire : **Mongrédien, André et al**
**c/o BREVATOME 25, rue de Ponthieu**
**F-75008 Paris (FR)**

## Description

La présente invention a pour objet un procédé de télédistribution d'informations enregistrées et un système mettant en œuvre ce procédé.

Le domaine d'application de l'invention couvre la télédistribution d'œuvres musicales, celle d'œuvres littéraires lues (romans, nouvelles, essais, pièces de théâtre, etc...), d'œuvres musicales avec commentaires, d'œuvres littéraires lues avec fond sonore, de journaux parlés, de cours, de conférences, etc... Mais c'est surtout dans le domaine de la télédistribution d'œuvres musicales enregistrées que l'invention trouve une application privilégiée. C'est donc cet exemple qui est retenu par la suite, sans qu'il y ait là un quelconque caractère limitatif.

L'audition de musique enregistrée fait appel essentiellement au disque et à la cassette magnétique. Ces moyens sont de nature telle qu'ils nécessitent, pour le mélomane qui désire écouter une pièce nouvelle, l'acquisition préalable d'un enregistrement auprès d'un commerçant. La satisfaction de ce désir ne peut donc être que différée.

Pour les enregistrements que l'on possède déjà, il en va naturellement autrement mais la constitution d'une discothèque, malgré tout l'intérêt qu'elle présente, se heurte à des difficultés que tous les mélomanes connaissent : outre le coût élevé d'une collection de ce type, certains enregistrements ont vu leur qualité se dégrader au point de devenir inaudibles et d'autres ont vu leur intérêt s'épuiser prématurément et sont laissés pour compte. Tous viennent encombrer la discothèque, qui de ce fait, et malgré son ampleur, ne parvient pas toujours à donner satisfaction.

Par ailleurs, certains enregistrements sont devenus si rares que seule une minorité peut en profiter, qui a pu les acquérir à temps, soit par goût soit par calcul. Ces œuvres musicales se trouvent alors en pratique retirées du marché, ce qui ampute d'autant le domaine musical disponible.

Quant à la musique diffusée à la radio ou à la télévision, malgré la qualité qu'elle présente souvent, il faut bien reconnaître qu'elle ne correspond pas toujours au goût de l'auditeur ni au désir du moment.

Il existe donc un réel besoin d'un système de distribution d'œuvres musicales qui évite ces inconvénients, c'est-à-dire qui réussisse à mettre à la disposition du mélomane et cela de manière quasi instantanée, l'œuvre musicale de son choix.

Le problème peut paraître insoluble. En effet, l'écoute d'une œuvre musicale suppose la possession d'un enregistrement et celui-ci ne peut être obtenu que de deux manières : soit par acquisition d'un support préalablement enregistré, soit par l'enregistrement chez soi sur magnétophone. Dans les deux cas, un délai est nécessaire. Pour l'enregistrement, le délai est court mais il est de toute manière au moins égal à la durée de l'œuvre. S'il s'agit d'opéras, de symphonies, etc... ce délai peut être d'une heure ou plus.

Il semble donc bien qu'on ne puisse espérer descendre en dessous de ce délai irréductible.

L'invention a justement pour but de résoudre ce problème en proposant un procédé et un système qui offrent, aux usagers qui en font la demande, tout morceau de musique de leur choix (ou toutes informations telles qu'énumérées plus haut) et cela en quelques secondes.

L'invention est basée sur des considérations de traitement de l'information qui peuvent être résumées de la manière suivante. Le débit d'information lié à la musique de qualité est de l'ordre de 0,5 Mbits/s. Or le débit d'information des canaux de transmission d'images utilisés en télévision (soit en diffusion, soit par câble ou fibres optiques) est très supérieur à cette valeur : il est de l'ordre de 10 Mbits/s voire de 140 Mbits sur fibre optique. Il est donc possible de transmettre des informations relatives à de la musique comprimées dans un facteur 200, dans un canal de transmission de ce type. Cela signifie qu'une œuvre musicale de durée égale à une heure peut être transmise ainsi en 18 secondes. Pour un facteur de compression moitié (100) le contenu d'un disque normal à deux faces de 20 minutes chacune, peut être transmis en 24 secondes.

L'invention préconise alors une application nouvelle des moyens de transmission d'images à haut débit à la transmission du son correspondant à des œuvres préalablement enregistrées de manière accélérée. L'enregistrement du son transmis dans ces conditions devra s'effectuer sur un appareil apte à enregistrer habituellement des signaux d'images, c'est-à-dire sur un appareil de type magnétoscope. La relecture de cet enregistrement devra s'accompagner d'une décélération du débit d'informations, pour redonner à l'œuvre son rythme normal.

Le message impliqué dans ce type de transmission est donc d'un type nouveau dans sa signification puisqu'il véhicule des informations de son. Mais dans sa structure, il s'agit de signaux classiques, numériques ou analogiques, comprenant un préambule d'adressage permettant de sélectionner l'usager qui a fait la demande, un corps de message qui correspond à l'œuvre musicale choisie, et une fin de message qui avertit l'usager de la fin de procédure d'enregistrement.

On observera que l'invention utilise des moyens qui, considérés séparément, sont en partie connus puisqu'il s'agit de réseaux de télématique et de moyens d'enregistrement. Mais ces moyens doivent être adaptés au problème à résoudre (compression de l'enregistrement à la source, constitution d'un message approprié, dilatation de l'enregistrement reçu). Mais pour l'essentiel, ces moyens sont éprouvés et l'un des intérêts de l'invention est justement de ne pas faire appel à des moyens de mise au point délicate mais d'utiliser, après légère adaptation, des installations déjà existantes.

De façon précise, l'invention a pour objet un procédé de télédistribution d'informations consistant à :

— constituer une banque d'enregistrements de ces informations,

— recevoir et identifier des appels d'usagers demandeurs d'une information particulière,

— former un message comprenant un préambule constitué par un code d'adressage vers l'usager demandeur, un corps de message constitué par l'information demandée, une fin de message,

— transmettre à l'usager demandeur ledit message par un canal de transmission,

— reconnaître, dans un équipement situé chez l'usager demandeur, le code d'adressage propre à cet équipement et, dans le cas de réception de ce code, enregistrer le corps du message transmis,

— après réception de la fin de message, lire le message enregistré.

Un tel procédé est connu par exemple par le document US-A-3 729 581. Le procédé de la présente invention est caractérisé par le fait que les informations à télédistribuer étant des informations relatives au son, ces informations possédant un rythme normal :

— on enregistre ces informations dans la banque d'enregistrements avec un rythme accéléré par rapport au rythme normal avec un facteur de compression au moins égal à 100,

— on utilise un canal de transmission qui est un canal de transmission d'images ayant un débit d'informations au moins égal au débit correspondant aux informations enregistrées,

— dans l'équipement situé chez l'usager, on enregistre le message sur un appareil du type magnétoscope apte à enregistrer des signaux d'images,

— on fait suivre l'opération de lecture d'une opération de décélération qui réduit le rythme des informations lues dans un rapport égal au facteur de compression pour redonner à ces informations leur rythme normal.

La transmission du message peut s'effectuer soit en analogique, soit en numérique.

L'invention a également pour objet un système de télédistribution d'informations enregistrées, pour la mise en œuvre du procédé qui vient d'être défini. Ce système est caractérisé en ce qu'il comprend :

a) un centre de distribution comprenant une banque d'enregistrements de ces informations, un moyen de formation d'un message comprenant un préambule constitué par un code d'adressage vers un usager demandeur, un corps de message correspondant aux informations sélectionnées, une fin de message,

b) des équipements d'usagers comprenant chacun un récepteur, un circuit indicateur apte à reconnaître l'arrivée d'un code d'adressage qui lui est propre et d'une fin de message, un enregistreur du corps de message,

c) un canal de transmission apte à transmettre des informations du centre de distribution à chaque équipement d'usager,

d) un réseau téléphonique reliant les équipements d'usager au centre de distribution, caractérisé par le fait que, les informations à télédistribuer étant des informations relatives au son, ces informations possédant un rythme normal :

— la banque contient des enregistrements accélérés par rapport au rythme normal avec un facteur de compression au moins égal à 100,

— le canal de transmission est un canal de transmission d'images ayant un débit d'informations au moins égal au débit correspondant aux informations enregistrées,

— dans l'équipement d'usager, l'enregistreur est un appareil du type magnétoscope apte à enregistrer des signaux d'images,

— l'enregistreur est suivi d'un décélérateur qui est apte à réduire le rythme des informations enregistrées dans un rapport égal au facteur de compression pour redonner à ces informations leur rythme normal, le décélérateur étant suivi d'une chaîne de restitution du son.

Les caractéristiques de l'invention apparaîtront mieux après la description qui suit, d'exemples de réalisation donnés à titre explicatif et nullement limitatif. Cette description se réfère à des dessins annexés sur lesquels :

La figure 1 est un schéma général d'un système conforme à l'invention,

la figure 2 est un schéma d'un décélérateur.

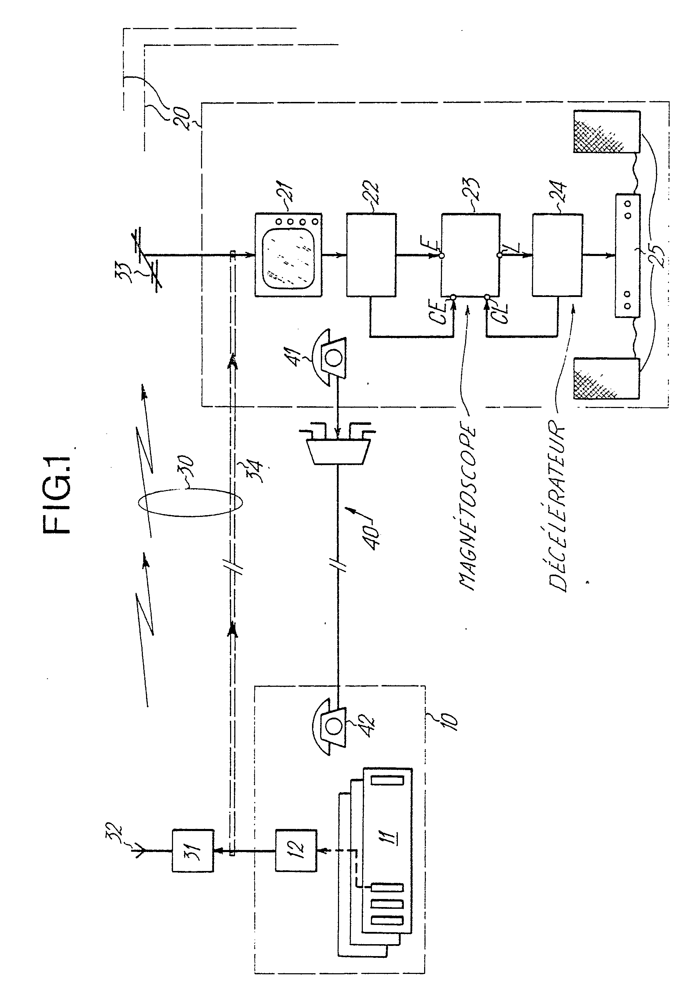

Le système représenté sur la figure 1 comprend d'une manière générale, un centre de distribution 10, des équipements d'usagers 20, un canal de transmission 30 et un réseau téléphonique 40.

De manière plus détaillée, le centre de distribution 10 comprend une banque 11 d'enregistrements d'œuvres musicales, ces œuvres étant enregistrées à un rythme plus rapide que le rythme normal (100 à 200 fois plus rapide). Le support d'enregistrement peut être un vidéodisque ou un magnétoscope. La compression de l'information sonore peut être obtenue par écriture dans une mémoire puis lecture à vitesse accélérée. Ce traitement s'effectue une fois pour toutes, pour chaque œuvre de la collection. Le centre de distribution 10 comprend encore un moyen 12 de formation d'un message à large bande ou à fort débit comprenant un préambule constitué par un code d'adressage correspondant à un usager demandeur, un corps de message correspondant à un usager demandeur, un corps de message correspondant à l'œuvre sélectionnée et une fin de message. A ces composantes essentielles peuvent s'ajouter les signaux que l'on trouve habituellement en transmission (impulsions de synchronisation, codes correcteurs d'erreur, etc...).

Chaque équipement d'usager 20 comprend un récepteur de télévision 21, un circuit indicateur 22 apte à reconnaître l'arrivée du code et la fin d'un message, un magnétoscope 23, commandé par le circuit indicateur 22, un décélérateur 24 relié au magnétoscope et apte à restituer aux informations leur rythme normal et enfin une chaîne de restitution du son 25 reliée au décélérateur.

Le magnétoscope 23 comprend une entrée d'écriture E, une sortie de lecture L, une entrée de commande d'écriture CE et une entrée de commande de lecture CL. L'entrée d'écriture et celle de commande d'écriture sont reliées au circuit indicateur 23 alors que la sortie de lecture et l'entrée de commande de lecture sont reliées au décélérateur 24.

Le canal de transmission 30 est apte à transmettre des informations du centre de distribution 10 vers chaque équipement d'usager 20. Son débit est d'au moins 50 Mbits/s. Il peut s'agir de moyens de diffusion comprenant un émetteur 31, une antenne d'émission 32, une antenne de réception 33, ou bien d'un câble ou de fibres optiques 34. Pour ces moyens, le débit est de l'ordre de 100 Mbits/s.

Le réseau téléphonique 40 relie les usagers au centre de distribution. Chaque usager dispose d'un combiné 41 relié à une ligne téléphonique le mettant en communication avec un poste central 42 situé dans le centre 10.

Le fonctionnement de ce système résulte de ce qui a été dit plus haut. L'usager qui désire écouter une œuvre appartenant à la collection enregistrée dans le centre 10, communique à celui-ci, par l'intermédiaire de la ligne téléphonique, les références de l'œuvre choisie. Il fournit également son identité soit par son nom et son adresse, soit par un code numérique. Le centre 10 sélectionne l'œuvre choisie, la lit et émet un message précédé du code d'adressage de l'usager. La réception du code d'adressage dans l'équipement 20 permet au circuit indicateur 22 de former un ordre de commande d'écriture par le magnétoscope 23. Les informations reçues par l'équipement 20 sont alors dirigées vers le magnétoscope 24 où elles sont enregistrées toujours au rythme rapide où elles ont été émises.

La phase d'écriture se prolonge tant que l'œuvre n'est pas complètement enregistrée. Mais comme exposé plus haut, cette phase est de toute manière de courte durée, étant donné la forte compression qui affecte les informations (supérieure à 100).

Lorsque la totalité de l'œuvre est transmise, le centre 10 émet, par le circuit 12, un code de fin de message qui est reconnu par le circuit 22, lequel arrête alors le magnétoscope 23. Un voyant peut indiquer à l'usager que l'écoute peut commencer.

Il est possible de conserver l'enregistrement sur le magnétoscope pour une écoute ultérieure, mais il est également possible de l'effacer, par commande de marche arrière de la bande enregistreuse et effacement. On peut également commander l'effacement de tous les messages antérieurs au dernier enregistrement reçu.

La question de l'adressage du message peut être résolue par tout moyen connu. On peut utiliser un code binaire propre à chaque usager. Le circuit d'identification 23 comprend alors un comparateur binaire apte à reconnaître l'arrivée d'un nombre prédéterminé. Un tel comparateur peut travailler bit à bit et comprendre autant de portes logiques de type ET que le code comprend de bits, chaque porte recevant d'une part un bit prédéterminé du code et, d'autre part, le bit de même rang du mot reçu. Les sorties de ces portes sont reliées à une porte logique ET supplémentaire dont la sortie indique si le code attendu a été reçu. Mais d'autres circuits sont possibles, par exemple des registres à décalage formés de bascules dont les sorties, directes ou inverses sont précâblées vers un additionneur en fonction du code attendu.

Le code d'adressage peut également utiliser des moyens analogiques, comme des combinaisons de fréquences, ainsi qu'on en trouve dans la numérotation téléphonique.

Si l'utilisation d'un code d'adressage est évidemment utile pour que l'information arrive à bonne destination, elle présente en outre l'intérêt de permettre une transmission différée du message. En effet, pour des raisons diverses, l'enregistrement peut être différé (saturation du centre, occupation du magnétoscope, etc.). L'utilisation d'un code d'adressage qui commande la mise en route de l'enregistrement évite à l'usager d'être présent pour recevoir le message.

La transmission de l'information peut s'effectuer en analogique pour les systèmes à diffusion et pour les réseaux câblés mais aussi en numérique pour ces derniers.

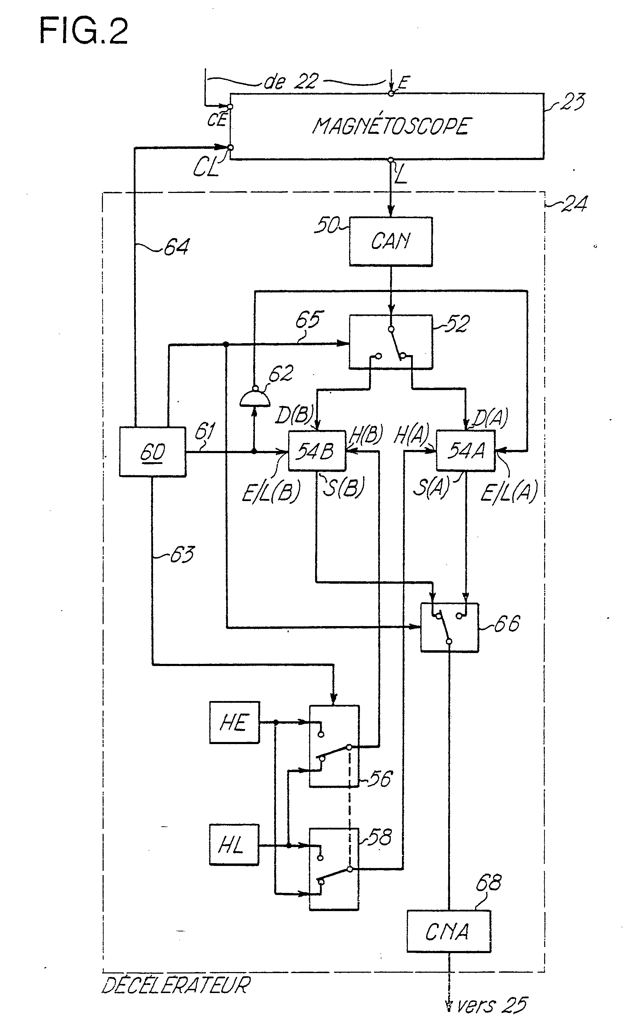

Un exemple de décélérateur pouvant être utilisé dans l'invention est illustré schématiquement sur la figure 2. Tel que représenté, cet appareil comprend un convertisseur analogique-numérique 50 (à moins naturellement que le magnétoscope 23 fonctionne en numérique) ; un aiguilleur d'entrée 52 à une entrée reliée au convertisseur 50 et à deux sorties ; deux blocs mémoire 54A et 54B, chaque bloc comprenant une entrée de données, respectivement D(A) et D(B) réunies aux deux sorties de l'aiguilleur 52, une entrée de commande du mode de fonctionnement (écriture ou lecture), respectivement E/L(A) et E/L(B), une entrée de signal d'horloge, respectivement H(A) et H(B) et une sortie S(A) et S(B) ; deux horloges HE et HL, la seconde possédant une fréquence très inférieure à celle de la première, le rapport des fréquences étant égal au taux de compression des informations dans le centre d'émission (par exemple 200) ; deux démultiplexeurs 56 et 58 à deux entrées réunies aux horloges et à une sortie, les sorties de ces deux démultiplexeurs étant reliées aux entrées H(A) et H(B) des deux mémoires, ces démultiplexeurs travaillant en mode alterné (c'est-à-dire que lorsque l'un a sa sortie réunies à l'horloge d'écriture HE, l'autre a sa sortie réunie à l'horloge de lecture HL) ; le décélérateur représenté comprend encore un circuit de commande 60 qui délivre, par une connexion 61, un ordre de commande du mode de fonctionnement, cette connexion étant reliée directement à l'entrée de commande E/L(B) de la mémoire 54B et par l'intermédiaire d'une porte NON 62 à l'entrée E/L(A) de la mémoire 54A, par une connexion 63, un ordre de commande aux démultiplexeurs 56 et 58, par une connexion 64 un ordre de commande de lecture au magnétoscope 23 et enfin, par une connexion 65, un ordre de commande de l'aiguilleur 52.

Le décélérateur représenté comprend encore un aiguilleur de sortie 66 à deux entrées reliées aux deux sorties S(A) et S(B) des mémoires et une sortie, cet aiguilleur 66 étant commandé par le circuit 60 comme l'aiguilleur 52 mais en opposition ; et enfin un convertisseur numérique-analogique 68 relié à l'aiguilleur 66 à moins naturellement que la chaîne ne fonctionne en numérique.

Le fonctionnement de ce circuit décélérateur est le suivant. Le circuit 60 commande la lecture de la bande enregistrée sur le magnétoscope 23 tranche par tranche. Lorsqu'une tranche est écrite dans un des blocs mémoire la tranche antérieure est lue dans l'autre bloc. Pour cela, l'aiguilleur 52 est mis dans la position qui relie l'une des entrées des blocs par exemple l'entrée D(A) du bloc 54A à la sortie L du magnétoscope. Le bloc 54A est commandé en écriture et le bloc 54B en lecture. L'aiguilleur 66 relie la sortie S(B) du bloc 54B au convertisseur 68.

L'écriture dans le bloc 54A s'effectue au rythme de l'horloge HE et la lecture dans le bloc 54B au rythme de l'horloge HL. C'est naturellement la lecture du bloc 54B qui demande le plus de temps puisque les fréquences des horloges HE et HL sont dans le rapport du taux de compression des informations. L'écriture d'une tranche dans le bloc 54A est donc achevée bien avant la lecture de la tranche précédente dans le bloc 54B. Lorsque cette lecture est achevée, le circuit 60 fait basculer l'aiguilleur 52, lequel met alors en liaison le bloc mémoire 54B avec le magnétoscope et basculer l'aiguilleur 66, lequel met alors en liaison le convertisseur 68 avec le bloc 54A. Le circuit 60 commande également en écriture le bloc 54B et en lecture le bloc 54A et fait basculer les démultiplexeurs 56 et 58 qui adressent alors aux blocs 54A et 54B des impulsions d'horloge respectivement de lecture et d'écriture. De cette manière, une nouvelle tranche d'informations peut être lue dans le magnétoscope.

L'avance du magnétoscope se fait donc de manière saccadée. Il peut fonctionner par exemple en régime de lecture d'images fixes successives. La commande est obtenue par le circuit 60, qui délivre les ordres appropriés par la connexion 64. On sait qu'un magnétoscope enregistre traditionnellement des images, qui contiennent chacune environ 5 Mbits d'informations. En l'occurrence, les informations ne correspondent pas à un signal visuel mais à un signal sonore, ce qui ne change rien du point de vue du traitement de l'information. Si chaque « image » est décomposée en 10 tranches, chaque tranche correspond à 500 kbits d'information. C'est la capacité que doit posséder chacun des blocs mémoire 54A et 54B. Dans la pratique, on pourra utiliser deux mémoires de 256 kbits. Une image entière correspondant à 1/25 de seconde d'enregistrement, pour un taux de compression de 200, une image entière correspond à 200/25 = 8 secondes de son et une tranche de 1/10 d'image à 0,8 seconde de son. C'est la période de basculement des phases d'écriture et de lecture dans le décélérateur.

Naturellement, les valeurs numériques qui viennent d'être indiquées ne sont que des exemples destinés à illustrer le mode de fonctionnement du système.

## Revendications

1. Procédé de télédistribution d'informations consistant à :
— constituer une banque d'enregistrements de ces informations,
— recevoir et identifier des appels d'usagers demandeurs d'une information particulière,
— former un message comprenant un préambule constitué par un code d'adressage vers l'usager demandeur, un corps de message constitué par l'information demandée, une fin de message,
— transmettre à l'usager demandeur ledit message par un canal de transmission,
— reconnaître, dans un équipement situé chez l'usager demandeur, le code d'adressage propre à cet équipement et, dans le cas de réception de ce code, enregistrer le corps du message transmis,
— après réception de la fin de message, lire le message enregistré,
caractérisé par le fait que les informations à télédistribuer étant des informations relatives au son, ces informations possédant un rythme normal :
— on enregistre ces informations dans la banque d'enregistrements avec un rythme accéléré par rapport au rythme normal avec un facteur de compression au moins égal à 100,
— on utilise un canal de transmission qui est un canal de transmission d'images ayant un débit d'informations au moins égal au débit correspondant aux informations enregistrées,
— dans l'équipement situé chez l'usager, on enregistre le message sur un appareil du type magnétoscope apte à enregistrer des signaux d'images,
— on fait suivre l'opération de lecture d'une opération de décélération qui réduit le rythme des informations lues dans un rapport égal au facteur de compression, pour redonner à ces informations leur rythme normal.

2. Procédé selon la revendication 1, caractérisé en ce que la transmission du message s'effectue en analogique.

3. Procédé selon la revendication 1, caractérisé en ce que la transmission du message s'effectue en numérique.

4. Système de télédistribution d'informations pour la mise en œuvre du procédé selon la revendication 1, ce système comprenant :
  a) un centre de distribution (10) comprenant une banque (11) d'enregistrements de ces informations, un moyen (12) de formation d'un message comprenant un préambule constitué par un code d'adressage vers un usager demandeur, un corps de message correspondant aux informations sélectionnées, une fin de message,

b) des équipements d'usagers (20) comprenant chacun un récepteur (21), un circuit indicateur (22) apte à reconnaître l'arrivée d'un code d'adressage qui lui est propre et d'une fin de message, un enregistreur du corps de message,

c) un canal de transmission (30) apte à transmettre des informations du centre de distribution (10) à chaque équipement d'usager (20),

d) un réseau téléphonique (20) reliant les équipements d'usager (20) au centre de distribution (10),

caractérisé par le fait que, les informations à télédistribuer étant des informations relatives au son, ces informations possédant un rythme normal :

— la banque (11) contient des enregistrements accélérés par rapport au rythme normal avec un facteur de compression au moins égal à 100,

— le canal de transmission (30) est un canal de transmission d'images ayant un débit d'informations au moins égal au débit correspondant aux informations enregistrées,

— dans l'équipement d'usager (20), l'enregistreur est un appareil (23) du type magnétoscope apte à enregistrer des signaux d'images,

— l'enregistreur (23) est suivi d'un accélérateur (24) qui est apte à réduire le rythme des informations enregistrées dans un rapport égal au facteur de compression pour redonner à ces informations leur rythme normal, le décélérateur étant suivi d'une chaîne de restitution du son (25).

5. Système selon la revendication 4, caractérisé en ce que le canal de transmission est un réseau de diffusion de télévision en couleur.

6. Système selon la revendication 4, caractérisé en ce que le canal de transmission est un réseau câblé.

7. Système selon la revendication 4, caractérisé en ce que le décélérateur comprend une mémoire partagée en deux blocs (54A, 54B) travaillant alternativement l'un en écriture, l'autre en lecture, et deux horloges (HE, HL) commandant chacune les deux blocs, l'une en écriture avec une première fréquence et l'autre en lecture avec une seconde fréquence inférieure à la première, un aiguilleur d'entrée (52) à une entrée reliée au magnétoscope et à deux sorties reliées aux deux blocs mémoire (54A, 54B), un aiguilleur de sortie à deux entrées reliées aux deux blocs mémoire et à une sortie.

## Claims

1. Process for the remote distribution of data comprising :

— forming a data bank of recordings,

— receiving and identifying requests from applicant users for a specific set of data,

— forming a message comprising a preambule constituted by an address code for the applicant user, a message body constituted by the requested data, and a message termination,

— transmitting said message to the applicant user by a transmission channel,

— recognizing in an equipment located at the address of the applicant user, the address code specific to said equipment and, when said code is received, recording the body of the transmitted message, and

— after reception of the message termination, reading out the recorded message, characterized by the fact that the data to be remotely distributed are audio data, said data having a normal speed :

— recording said data in a recorded data bank at a speed accelerated with respect to the normal speed by a compression factor of at least 100,

— employing a transmission channel which is an image-transmission channel having a rate of data flow at least equal to the rate of the recorded data,

— recording the message on the equipment located at the address of the user, on an apparatus of the magnetoscopic video-recorder type,

— reading-out the information after a deceleration operation carried out in a ratio equal to the compression ratio to provide said data with their normal speed.

2. Process according to Claim 1, characterized in that transmission of the message is carried out by analogue means.

3. Process according to Claim 1, characterized in that transmission of the message is carried out by digital means.

4. System for the remote distribution of data to carry out a process according to Claim 1, said system comprising :

a) a distribution centre (10) comprising a bank (11) of recorded data, a means (12) for forming a message comprising a preamble constituted by an address code for the applicant user, a message body corresponding to selected data, and a message termination,

b) user equipment (20) each comprising a receiver (21), an indicator circuit (22) adapted to recognize the arrival of an appropriate address code and of a message termination, and a recorder for the body of the message,

c) a transmission channel (30) adapted to transmit data from the distribution centre (10) to each user equipment (20),

d) a telephone network (20) connecting the user equipment (20) to the distribution centre (10),

characterized by the fact that the data to be remotely distributed are audio data, said data having a normal speed :

— the bank (11) contains data recorded at a speed accelerated with respect to the normal speed by a compression factor of at least 100,

— the transmission channel (30) is an image-transmission channel having a rate of flow of data at least equal to the rate of flow corresponding to the recorded data

— the recorder in the user equipment (20) is an apparatus (23) of the magnetoscopic video recorder type, and

— the recorder (23) is followed by a decelerator (24) adapted to reduce the speed of recorded data in a ratio equal to the compression factor to restore the normal speed to said data, the decelerator being followed by a sound reproduction system (25).

5. System according to Claim 4, characterized in that the transmission channel is a broadcast colour television system.

6. System according to Claim 4, characterized in that the transmission channel is a cable network.

7. System according to Claim 4, characterized in that the decelerator comprises a memory split into two blocks (54A, 54B) operating alternately, one for writing-in and the other for reading-out, and two clocks (HE, HL) each controlling one of the two blocks, the one for writing-in having a first frequency, and the other for reading-out having a second frequency lower than the first frequency, an input switch (52) having one input connected to the magnetoscopic recorder, and with two outputs connected to the two memory blocks (54A, 54B), and an output switch with two inputs connected to the two memory blocks, and with one output.

**Patentansprüche**

1. Verfahren zur Fernverteilung von Informationen, enthaltend :
— Bilden einer Speicherbank dieser Informationen,
— Empfangen und Identifizieren von eine spezielle Information verlangenden Benutzeranrufen,
— Bilden einer Meldung, bestehend aus einer Präambel, die von einem Adressencode des anfragenden Benutzers, einem Meldungskern, bestehend aus der verlangten Information, einem Meldungsende gebildet ist,
— Übertragen der genannten Meldung über einen Übertragungskanal an den anfragenden Benutzer,
— Erkennen in einer beim anfragenden Benutzer angeordneten Einrichtung der für diese Einrichtung geeigneten Adressencodes und Speichern des übertragenen Meldungskerns im Falle des Empfangs dieses Codes,
— nach Empfang des Meldungsendes Lesen der eingespeicherten Meldung,
gekennzeichnet durch die Tatsache, daß die fernzuverteilenden Informationen solche über Tondarbietungen sind und einen Normaltakt aufweisen, daß man :
— diese Informationen in der Speicherbank mit einem gegenüber dem Normaltakt um einen Kompressionsfaktor von wenigstens gleich 100 beschleunigten Takt einspeichert,
— einen Übertragungskanal verwendet, der ein Bildübertragungskanal ist, der einen Informationsdurchsatz aufweist, der wenigstens gleich dem Durchsatz entsprechend den gespeicherten Informationen ist,
— in der beim Benutzer gelegenen Einrichtung die Meldung auf einem magnetoskopischen Gerät speichert, das zur Speicherung von Bildsignalen geeignet ist,
— dem Lesebetrieb einen Verzögerungsbetrieb folgen läßt, der den Takt der gelesenen Informationen um ein Ausmaß reduziert, das gleich dem Kompressionsfaktor ist, um diesen Informationen ihren Normaltakt wiederzugeben.

2. Verfahren nach Anspruch 1, dadurch gekennzeichnet, daß die Übertragung der Meldung sich im Analogbetrieb vollzieht.

3. Verfahren nach Anspruch 1, dadurch gekennzeichnet, daß die Übertragung der Meldung sich numerisch vollzieht.

4. System zur Fernverteilung von Informationen zur Durchführung des Verfahrens nach Anspruch 1, enthaltend :
a) ein Verteilungszentrum (10) bestehend aus einer Bank (11) zur Speicherung dieser Informationen, einer Einrichtung (12) zum Bilden einer Meldung, enthaltend eine Präambel, die von einem Adressencode des anfragenden Benutzers gebildet ist, einen Meldungskern, der den ausgewählten Informationen entspricht, und ein Meldungsende,
b) Benutzereinrichtungen (20), die jeweils einen Empfänger (21), einen Indikatorkreis (22), der zum Erkennen der Ankunft eines ihm zugehörigen Adressencodes und eines Meldungsendes geeignet ist, und einen Speicher für den Meldungskern aufweisen,
c) einen Übertragungskanal (30), der zur Übertragung der Informationen vom Verteilungszentrum (30) zu jeder Benutzereinrichtung (20) geeignet ist,
d) ein Telefonnetz (20), das die Benutzereinrichtungen (20) mit dem Verteilungszentrum (10) verbindet,
gekennzeichnet durch die Tatsache, daß die fernzuverteilenden Informationen solche bezüglich Tondarbietungen sind und einen Normaltakt aufweisen, und daß
— die Bank (11) gegenüber dem Normaltakt um einen Kompressionsfaktor von wenigstens gleich 100 beschleunigte Speicherwerte aufweist,
— der Übertragungskanal (30) ein Bildübertragungskanal ist, der einen Informationsdurchsatz hat, der wenigstens gleich dem Durchsatz ist, der den eingespeicherten Informationen entspricht,
— in der Benutzereinrichtung (20) der Speicher ein magnetoskopisches Gerät (23) ist, das zum Speichern von Bildsignalen geeignet ist,
— der Speicher (23) von einem Verzögerer (24) gefolgt ist, der dazu eingerichtet ist, den Takt der eingespeicherten Informationen um ein Maß zu reduzieren, das gleich dem Kompressionsfaktor ist, um diesen Informationen ihren Normaltakt wiederzugeben, wobei die Verzögerungseinrichtung von einer Tonwiedergabekette (25) gefolgt ist.

5. System nach Anspruch 4, dadurch gekennzeichnet, daß der Übertragungskanal ein Farbfernsehverteilungsnetz ist.

6. System nach Anspruch 4, dadurch gekennzeichnet, daß der Übertragungskanal ein Kabelnetz ist.

7. System nach Anspruch 4, dadurch gekennzeichnet, daß die Verzögerungseinrichtung einen Speicher enthält, der in zwei Blöcke (54A, 54B) unterteilt ist, die alternativ arbeiten, der eine einschreibend, der andere lesend, und zwei Taktquellen (HE, HL) vorgesehen sind, die jeweils die zwei Blöcke steuern, den einen beim Einschreiben mit einer ersten Frequenz und den anderen beim Lesen mit einer zweiten, unterhalb der ersten liegenden Frequenz, einen Eingangsweichensteller (52) mit einem Eingang, der mit dem Magnetoskop verbunden ist, und mit zwei Ausgängen, die mit den zwei Speicherblöcken (54A, 54B) verbunden sind, einen Ausgangsweichensteller mit zwei Eingängen, die mit den zwei Speicherblöcken verbunden sind, und einem Ausgang.

# FIG.1

0 082 077

FIG.2

0 082 077